# EUROPEAN PATENT SPECIFICATION

(11) **EP 2 178 392 B1**
(45) Date of publication and mention of the grant of the patent: **12.10.2011**
(21) Application number: 08773970.2
(22) Date of filing: 09.07.2008
(51) Int. Cl.: A23L 1/00, A23L 1/01, A23L 1/212

(54) **METHODS FOR THE PREPARATION OF VEGETABLE CHIPS OR FRENCH FRIES**
VERFAHREN ZUR HERSTELLUNG VON GEMÜSE-CHIPS ODER -FRITTEN
PROCÉDÉS DE PRÉPARATION DE CHIPS VÉGÉTALES OU DE POMMES DE TERRE FRITES

(30) Priority: 09.07.2007 NL 1034115
(43) Date of publication of application: 28.04.2010
(73) Proprietor: Bimaja Holding B.v., 1399 GM Muiderberg (NL)
(72) Inventor: VAN HULST, Marcus, Wilhelmus, Johannes, NL-1399 GM Muiderberg (NL)
(74) Representative: van Kooij, Adriaan
(86) International application number: PCT/EP2008/005676
(87) International publication number: WO 2009/007126

(56) References cited:
- EP-A- 0 204 939
- EP-A- 1 228 700
- WO-A-2006/023974
- DE-A1- 3 617 478
- FR-A- 2 847 427
- US-A- 4 272 553
- US-A1- 2007 065 569
- ANONIEM: "Fun Letters Mix" PRODUCT INFORMATIE, [Online] 2006, XP002472368 Retrieved from the Internet: URL:http://www.farmfrites.nl> [retrieved on 2008-03-11]
- ANONIEM: "Farm Frites introduceert de Letterpret Alfabet Games" DE BEDRIJVENDATABENK: BUSINESS-TO-CONSUMER, [Online] 4 January 2006 (2006-01-04), XP002472369 Retrieved from the Internet: URL:www.bedrijvendatabank.nl> [retrieved on 2008-03-11]

## Description

The present invention relates to methods for the preparation of vegetable chips or French fries. The present invention further relates to the vegetable chips or French fries obtained with the present methods.

In the last decades, overweight or obesitas has become an ever larger problem, and particularly in the developed countries. This because the increased number of obesitas cases is correlated with an increasing incidence of cardiovascular diseases and diabetes.

An additional problem is that particularly the number of juveniles with obesitas is increasing. This increase in the number of juveniles with obesitas can at least partially be explained by a change in the food consumption pattern.

In the past, generally three meals per day were consumed. Presently, this has changed. Especially juveniles show a consumption pattern which can be described as "snacking" or "grazing". Because of this, the energy or caloric intake is relatively large. Further, as compared to the past, juveniles are also less mobile which also attributes to the development of obesitas.

Because of the altered consumption pattern of particularly juveniles, the consumption of fresh fruits and vegetables is also decreased. Considering the generally known positive effects of fruits and vegetables on health in general, and particularly obesitas, it is desirably to increase the consumption thereof.

US 2007/065569 discloses the preparation of French fries, wherein a dry mix of potato powder, dried cauliflower, calcium caseinate, egg whites, onion powder, sodium chloride, saladizer, guns and pepper is prepared, which is combined with water, shaped into fries and frozen.

US 4272553 discloses a process for making fried vegetables, comprising coating raw or frozen pieces of the vegetables, blanching and deep frying. In Example 4 carrot strips are coated with a mixture of wheat flour and corn starch. In Example 5 cauliflower florets are dipped in a batter containing whole eggs, milk powder, salt, pepper and water and then coated with corn flake crumbs.

Accordingly, it is an object of the present invention, amongst others, to provide at least a partial solution for the above problems, and particularly obesitas.

According to the present invention, amongst others, the above object is met by a method as defined in the appended claim 1.

Specifically, the present invention relates to a method for the preparation of vegetable chips or French fries, comprising:
i) preparing a mixture comprising between 20 to 90% (w/w) of a vegetable source and/or fruit source, a protein source, between 0 to 30%, preferably 3 to 30% (w/w) water and a thickening agent;
ii) moulding the mixture prepared into chips or French fries;
wherein, preferably, the vegetable source is chosen from the group consisting of maize, carrot, pea, broccoli, cauliflower, bean, green bean, haricot bean, leek, onion, beet, rutabaga, and combinations thereof, and wherein none of said vegetable, fruit and protein sources comprise potato.

According to the present invention, the terms "chips" and "French fries" are used interchangeably.

According to the present invention, the present chips or French fries have preferably a substantially elongated columnar shape, although other shapes are also possible.

According to the present invention, the vegetable source does not comprise whole potato, potato parts or flour of potato (purée). This because, besides being a source of high calories, the use of potato does not provide a desirable texture and/or taste to the final product.

The method according to the present invention provides chips or French fries with a low caloric value and, additionally, provides a considerable amount of the recommended daily intake of vegetables and/or fruits. Because of this, not only the daily caloric intake is potentially reduced but also the general health is increased.

Preferably, the chips or French fries according to the present invention only comprise a vegetable source since this provides an improved texture of the final product.

The vegetable and/or fruit source according to the present invention can comprise vegetable and/or fruit parts but can also be processed, for example into a flour of leguminous vegetables and/or fruits, preferably vegetables.

According to the present invention, the protein source attributes to the texture of the final product. Additionally, the present protein source provides an improved browning of the final product when heated.

Preferably, the chips or French fries are, after step (ii), frozen to obtain, amongst others, a product with an extended shell-life.

Before step (ii), the vegetable and/or fruit source, preferably the vegetable source, is preheated, preferably preboiled. Heating, amongst others, inhibits or inactivates the enzyme activity present thereby improving the quality of the final product. Additionally, heating inhibits, or kills, optionally present pathogens.

In order to provide an optimal taste at a low caloric intake, the vegetable source comprises 50% to 60% (w/w), preferably 60% (w/w), of the present mixture.

Preferably, the present protein source comprises 2% to 30% (w/w), preferably 4 to 15% (w/w), of said mixture.

According to a preferred aspect of the present invention, the protein source is chosen from the group consisting of meat protein, blood protein, egg protein, whole egg, bean, and combinations thereof.

Also the thickening agent according to the present invention contributes to the texture of the final product.

Preferably, the thickening agent comprises a heat-binder and/or cold-binder, more preferably a heat-binder and a cold-binder.

A heat-binder provides the major binding activity at elevated temperatures such as cooking, baking and frying and a cold-binder provides the major binding activity at lower temperatures such as around ambient temperature.

Through the combined binding activities of the heat- and cold-binder, the texture of the final product in the temperature range of use, i.e., from below 0°C to about 250°C, is maintained.

Preferably, the heat- and/or cold-binder comprise starch, modified starch or gum.

The binder (heat or cold) according to the present invention can also comprise alginic acid, sodium alginate, potassium alginate, ammonium alginate, calcium alginate, agar, propylene glycoalginate, carrageen, furcellerane, locust bean gum, CMC's, guar gum, and/or gellangum.

The starch or modified starch can be obtained from any suitable source such as maize, wheat, rice, tapioca, and/or soy.

According to the present invention, the modified starch of the heat-binder comprises a hydroxypropyl starch phosphate.

Other suitable heat-binders are, amongst others, dextrin, acid-created starch, alkali-treated starch, bleaches starch, oxidised starch, mono-starch phosphate, di-starch glycerol, di-starch phosphate, phosphonated di-starch phosphate, acetylated di-starch phosphate, getflour acetate, acetylated di-starch adipate, acetylated di-starch glycerol, hydroxypropyl starch, hydroxypropyl di-starch glycerol, hydroxypropyl di-starch phosphate, starch sodium octenyl succinate.

Especially preferred characteristics of the present chips or French fries are obtained when the heat-binder has a viscosity, at 95°C, of between 600 and 1000 BU (Brabender viscosity units).

The viscosity of the heat-binder is determined by heating a suspension of the heat-binder (500 mg in a concentration of 32 mg/g dry matter in water of 5-7° dH) from 50°C to 95°C (rate 1.5°C/min) and maintaining the suspension at this temperature for 30 minutes. The apparatus used for the measurement of the viscosity is the Brabender E-type with a head of 350 cmg and n is 75 per minute.

Further, preferred characteristics of the present chips or French fries are obtained when the cold-binder has a viscosity of between 1500 to 5000 mPa.s.

The viscosity of the cold-binder is measured by adding 10 grams of the cold-binder to 12 ml ethanol (v/v) and, subsequently, 190 ml distilled water. This is achieved by moistening with ethanol and, subsequently, by adding of water within 1 minute while continuously stirring using a glass rod. The viscosity is then determined by conditioning at 20°C for 30 minutes and, subsequently, feeding into a Brookfield LVF; spindle is 2, n is 6, and reading out after 5 revolutions.

The above indicated heat- and cold-binders are preferably combined, especially when only a vegetable source with no fruit source is used.

According to another preferred aspect of the present method, the present chips or French fries are processed for consumption by frying, steaming, microwave heating, deep frying or baking after step (iii), preferably deep frying.

According to the present invention, for deep frying, an oil is used comprising less than 25% saturated fat and/or less than 1% free fatty acids.

Preferably, the mixture according to the present invention further comprises meat, fish, flavouring agents, antioxidant, bouillon, browning means and/or conservatives.

The chips or French fries according to the present invention are preferably, after step (ii), coated with, for example, bread crumbs.

According to a particularly preferred aspect of the present invention, the present mixture further comprises prebiotics.

A prebiotic is defined as a, for a host, such as a human, "non-digestible" food ingredient promoting the growth of one or more specific bacterial species, such as bifidobacteria or lactobacilli, in the colon. Suitable examples of prebiotics are fructans such as inuline and FOS; GOS (Galacto-oligosaccharides); and Xylo oligosaccharides and other oligosaccharides.

Considering the beneficial effects, especially with respect to obesitas and vegetable intake, of the chips or French fries provided by the present method, the present invention also relates to chips or French fries obtainable by the present methods.

The present invention will be further detailed below in the examples of preferred embodiments.

### Examples

### Example I: formulation 1 for vegetable chips or French fries

| **Ingredient** | | **Percentage (w/w)** |
|---|---|---|
| 1 | Green peas | 37.3 |
| 2 | Vegetable fluid (water, sugar, salt, natural flavouring agents) | 20.7 |
| 3 | Maize (precooked) | 12.4 |
| 4 | Carrots (precooked) | 12.4 |
| 5 | Soy protein | 2.9 |
| 6 | Vegetable oil | 1.7 |
| 7 | Egg protein in powder form | 1.2 |
| 8 | Whey powder concentrate | 0.6 |
| 9 | Vegetarian garden herbs bouillon | 0.4 |
| 10 | Modified starch (heat-binder) | 6.0 |
| 11 | Pregeletinized modified starch (cold-binder) | 4.3 |

The above ingredients were used in a method for the preparation of vegetable chips or French fries in the amounts indicated. The method comprised:
a) Adding into a blender ingredients 1 to 9;
b) Blending the ingredients in the blender until an uniform smooth mass is obtained;
c) Adding, by gently mixing (not blending), ingredient 10 until an uniform smooth mass is obtained;
d) Adding, by gently mixing (not blending), ingredient 11 until an uniform smooth mass is obtained;
e) Moulding the mass obtained into chips, for for example, by using a form extruder or a Tromp Unimac dosing & forming apparatus;
f) Cutting the moulded mass to a suitable length;
g) Freezing the product of (f);
h) Deep frying of the product of (g) at 180°C for about 3 minutes;

### Example II: formulation 2 for vegetable chips or French fries

| **Ingredient** | | **Percentage (w/w)** |
|---|---|---|
| 1 | Green peas | 37.3 |
| 2 | Vegetable fluid (water, sugar, salt, natural flavouring agents) | 20.7 |
| 3 | Maize (precooked) | 12.4 |
| 4 | Carrots (precooked) | 12.4 |
| 5 | Inuline | 3.5 |
| 6 | Soy protein | 1.8 |
| 7 | Vegetable oil | 1.6 |
| 8 | Egg protein in powder form | 1.1 |
| 9 | Whey powder concentrate | 0.6 |
| 10 | Vegetarian garden herbs bouillon | 0.4 |
| 11 | Modified starch (heat-binder) | 4.9 |
| 12 | Pregeletinized modified starch (cold-binder) | 3.2 |

The above ingredients were used in a method for the preparation of vegetable chips or French fries in the amounts indicated. The method comprised:
a) Adding into a blender ingredients 1 to 10;
b) Blending the ingredients in the blender until an uniform smooth mass is obtained;
c) Adding, by gently mixing (not blending), ingredient 10 until an uniform smooth mass is obtained:
d) Adding, by gently mixing (not blending), ingredient 11 until an uniform smooth mass is obtained;
e) Moulding the mass obtained into chips, for example, by using a form extruder or a Tromp Unimac dosing & forming apparatus;
f) Cutting the moulded mass to a suitable length;
g) Freezing the product of (f);
h) Deep frying of the product of (g) at 180°C for about 3 minutes;

## Claims

1. Method for the preparation of vegetable chips or French fries, comprising:
i) preparing a mixture comprising between 20 to 90% (w/w) of a vegetable source and/or fruit source, a protein source, between 0 to 30% (w/w) water and a thickening agent;
ii) moulding the mixture prepared into chips or French fries;
wherein none of said vegetable, fruit and protein sources comprise potato.

2. Method according to claim 1, wherein the vegetable source is chosen from the group consisting of maize, carrot, pea, broccoli, cauliflower; bean, green bean, haricot bean, leek, onion, beet, rutabaga, and combinations thereof.

3. Method according to claim 1 or claim 2, comprising step (iii) comprising freezing said chips or French fries obtained.

4. Method according to any of the claims 1 to 3,
wherein said vegetable and/or fruit source is preheated, preferably preboiled.

5. Method according to any of the claims 1 to 4,
wherein said vegetable source comprises 50% to 60% (w/w), preferably 60% (w/w), of said mixture.

6. Method according to any of the claim 1 to 5,
wherein said protein source comprises 2% to 30% (w/w), preferably 4 to 15% (w/w), of said mixture.

7. Method according to any of the claims 1 to 6,
wherein said protein source is chosen from the group consisting of meat protein, blood protein, egg protein, whole egg, bean, and combinations thereof.

8. Method according to any of the claims 1 to 7,
wherein the thickening agent comprises a heat-binder and/or cold-binder.

9. Method according to claim 8, wherein said heat-binder and/or cold-binder comprises modified starch or gum.

10. Method according to claim 9, wherein said modified starch of the heat-binder comprises hydroxypropyl starch phosphate.

11. Method according to claim 9, wherein said modified starch of the cold-binder comprises pregelatinized starch phosphate.

12. Method according to any of the claims 8 to 11,
wherein said heat binder has a viscosity of between 660 to 1000 BU at 95°C after 30 minutes.

13. Method according to any of the claims 8 to 12,
wherein said cold-binder has a viscosity of between 1500 and 5000 mPa.s.

14. Method according to any of the claims 1 to 13,
wherein said chips or French fries are processed for consumption by frying, steaming, microwave heating, deep frying or baking after step (iii).

15. Method according to claim 14, wherein said chips or French fries are processed for consumption by deep frying.

16. Method according to claim 15, wherein for said deep frying an oil is used comprising less than 25% saturated fat and/or less than 1% free fatty acids.

17. Method according to any of the claims 1 to 16,
wherein said mixture further comprises, meat, fish, flavouring agents, antioxidant, bouillon, browning means, and/or conservatives.

18. Method according to any of the claims 1 to 17,
wherein, after step (ii), said chips or French fries are coated.

19. Method according to any of the claims 1 to 18,
wherein said mixture further comprises prebiotics.

## Patentansprüche

1. Verfahren zur Herstellung von Gemüse-Chips oder - Fritten, enthaltend:
i) Herstellen eines Gemischs, das zwischen 20 und 90% (w/w) einer Gemüse-Quelle und/oder ObstQuelle, eine Proteinquelle, zwischen 8 und 30% (w/w) Wasser und ein Verdickungsmittel enthält;
ii) Formen des hergestellten Gemischs zu Chips oder Fritten;
wobei keine der Gemüse-, Obst- und Proteinquellen Kartoffel enthält.

2. Verfahren nach Anspruch 1, wobei die Gemüse-Quelle aus der Gruppe ausgewählt ist, die aus Mais, Karotten, Erbsen, Brokkoli, Blumenkohl, Bohnen, Grünen Bohnen, Gartenbohnen, Lauch, Zwiebeln, Rüben, Kohlrüben und Kombinationen davon besteht.

3. Verfahren nach Anspruch 1 oder 2, enthaltend Schritt (iii) enthaltend das Einfrieren der so erhaltenen Chips oder Fritten.

4. Verfahren nach jedem der Ansprüche 1 bis 3, wobei die Gemüse- und/oder Obstquelle vorgewärmt, vorzugsweise vorgekocht ist.

5. Verfahren nach jedem der Ansprüche 1 bis 4, wobei die Gemüse-Quelle 50% bis 60% (w/w), vorzugsweise 60% (w/w) des Gemischs umfasst.

6. Verfahren nach dem der Ansprüche 1 bis 5, wobei die Protein-Quelle 2% bis 30% (w/w), vorzugsweise 4 bis 15% (w/w) des Gemischs umfasst.

7. Verfahren nach jedem der Ansprüche 1 bis 6, wobei die Protein-Quelle aus der Gruppe ausgewählt ist, die aus Fleisch-Protein, Blut-Protein, Ei-Protein, ganzem Ei, Bohnen und Kombinationen davon besteht.

8. Verfahren nach jedem der Ansprüche 1 bis 7, wobei das Verdickungsmittel einen Heiß-Binder und/oder Kalt-Binder enthält.

9. Verfahren nach Anspruch 8, wobei der Heiß-Binder und/oder Kalt-Binder modifizierte Stärke oder Gummi enthält.

10. Verfahren nach Anspruch 9, wobei die modifizierte Stärke des Heiß-Binders Hydroxypropyl-Stärke-Phosphat enthält.

11. Verfahren nach Anspruch 9, wobei die modifizierte Stärke des Kalt-Binders vorgeliertes Stärke-Phosphat enthält.

12. Verfahren nach jedem der Ansprüche 8 bis 11, wobei der Heiß-Binder eine Viskosität zwischen 660 und 1.000 BU bei 95°C nach 30 Minuten aufweist.

13. Verfahren nach jedem der Ansprüche 8 bis 12, wobei der Kalt-Binder eine Viskosität zwischen 1.500 und 5.000 mPa.s. hat.

14. Verfahren nach jedem der Ansprüche 1 bis 13, wobei die Chips oder Fritten zum Verbrauch bearbeitet werden durch Braten, Dämpfen, Mikrowelle-Erhitzen, Frittieren oder Backen nach Schritt (iii).

15. Verfahren nach Anspruch 14, wobei die Chips oder Fritten zum Verbrauch durch Frittieren bearbeitet werden.

16. Verfahren nach Anspruch 15, wobei zu dem Frittieren ein Öl verwendet wird, das weniger als 25% gesättigtes Fett und/oder weniger als 1% freie Fettsäuren enthält.

17. Verfahren nach jedem der Ansprüche 1 bis 16, wobei das Gemisch ferner Fleisch, Fisch, Geschmacksmittel, Antioxidantien, Boullion, Bräunungs-mittel und/oder Konservierungsstoffe enthält.

18. Verfahren nach jedem der Ansprüche 1 bis 17, wobei nach Schritt (ii) die Chips oder Fritten beschichtet werden.

19. Verfahren nach jedem der Ansprüche 1 bis 18, wobei das Gemisch außerdem Prebiotics enthält.

## Revendications

1. Procédé pour la préparation de chips ou de frites de légumes, comprenant :
i) la préparation d'un mélange comprenant entre 20 et 90 % (p/p) d'une source de légumes et/ou d'une source de fruits, une source de protéines, entre 0 et 30 % (p/p) d'eau et un agent épaississant ;
ii) le moulage du mélange préparé en chips ou frites;
dans lequel aucune parmi lesdites sources de légumes, de fruits et de protéines ne comprend de pomme de terre.

2. Procédé selon la revendication 1, dans lequel la source de légumes est choisie dans le groupe constitué par le maïs, la carotte, le pois, le brocoli, le chou-fleur, le haricot, le haricot vert, le haricot blanc, le poireau, l'oignon, la betterave, le rutabaga, et leurs combinaisons.

3. Procédé selon la revendication 1 ou la revendication 2, comprenant l'étape (iii) comprenant la congélation desdites chips ou frites obtenues.

4. Procédé selon l'une quelconque des revendications 1 à 3, dans lequel ladite source de légumes et/ou de fruits est préchauffée, de préférence pré-bouillie.

5. Procédé selon l'une quelconque des revendications 1 à 4, dans lequel ladite source de légumes représente 50% à 60% (p/p), de préférence 60 % (p/p) dudit mélange.

6. Procédé selon l'une quelconque des revendications 1 à 5, dans lequel ladite source de protéines représente 2% à 30% (p/p), de préférence 4 à 15% (p/p) dudit mélange.

7. Procédé selon l'une quelconque des revendications 1 à 6, dans lequel ladite source de protéines est choisie dans le groupe constitué par la protéine de viande, la protéine de sang, la protéine d'oeuf, l'oeuf entier, le haricot, et leurs combinaisons.

8. Procédé selon l'une quelconque des revendications 1 à 7, dans lequel l'agent épaississant comprend un liant à la chaleur et/ou un liant au froid.

9. Procédé selon la revendication 8, dans lequel ledit liant à la chaleur et/ou liant au froid comprend une gomme ou un amidon modifié.

10. Procédé selon la revendication 9, dans lequel ledit amidon modifié du liant à la chaleur comprend du phosphate d'hydroxypropyl-amidon.

11. Procédé selon la revendication 9, dans lequel ledit amidon modifié du liant au froid comprend du phosphate d'amidon pré-gélatinisé.

12. Procédé selon l'une quelconque des revendications 8 à 11, dans lequel ledit liant à la chaleur a une viscosité comprise entre 660 et 1000 BU à 95°C après 30 minutes.

13. Procédé selon l'une quelconque des revendications 8 à 12, dans lequel ledit liant à froid a une viscosité comprise entre 1500 et 5000 mPa.s.

14. Procédé selon l'une quelconque des revendications 1 à 13, dans lequel lesdites chips ou frites sont traitées pour être consommées par friture, cuisson à la vapeur, chauffage au micro-ondes, friture profonde ou cuisson au four après l'étape (iii).

15. Procédé selon la revendication 14, dans lequel lesdites chips ou frites sont traitées pour être consommées par friture profonde.

16. Procédé selon la revendication 15, dans lequel, pour ladite friture profonde, est utilisée une huile comprenant moins de 25% de graisses saturées et/ou moins de 1% d'acides gras libres.

17. Procédé selon l'une quelconque des revendications 1 à 16, dans lequel ledit mélange comprend en outre de la viande, du poisson, des agents de saveur, un antioxydant, un bouillon, des moyens de brunissement, et/ou des conservateurs.

18. Procédé selon l'une quelconque des revendications 1 à 17, dans lequel, après l'étape (ii), lesdites chips ou frites sont enrobées.

19. Procédé selon l'une quelconque des revendications 1 à 18, dans lequel ledit mélange comprend en outre des prébiotiques.
